(19) Europäisches Patentamt
European Patent Office
Office européen des brevets

(11) **EP 1 925 914 A2**

(12) **EUROPÄISCHE PATENTANMELDUNG**

(43) Veröffentlichungstag:
**28.05.2008 Patentblatt 2008/22**

(51) Int Cl.:
***G01D 5/20*** (2006.01)

(21) Anmeldenummer: **07022568.5**

(22) Anmeldetag: **21.11.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK RS**

(30) Priorität: **22.11.2006 DE 102006055409**

(71) Anmelder: **AB Elektronik GmbH
59368 Werne (DE)**

(72) Erfinder: **Stephan, Rühl
44534 Lünen (DE)**

(74) Vertreter: **Wenzel & Kalkoff
Postfach 2448
58414 Witten (DE)**

(54) **Induktiver Sensor zur Erfassung von zwei Koppelelementen**

(57) Beschrieben sind eine induktive Sensorvarrichtung und ein Verfahren zur induktiven Erfassung. Eine erste und eine zweite Erregerspule 16a, 16b erstrecken sich räumlich variierend über einen Meßbereich. Ein erstes und ein zweites induktives Koppelelement 12a, 12b überkoppeln ein Signal der Erregerspulen 16a, 16b in eine Empfangsspule 18. Die induktiven Koppelelemente 12a, 12b sind als Resonanzelemente mit einer ersten Resonanzfrequenz $f_1$ und einer zweiten Resonanzfrequenz $f_2$ ausgebildet. Um auf einfache Weise die Position beider induktiver Koppelelemente schnell und genau ermitteln zu können, werden die beiden Erregerspulen 16a, 16b mit unterschiedlichen Sendesignalen $S_1$, $S_2$ betrieben. Jedes der Sendesignale $S_1$, $S_2$ weist in zeitlicher Abfolge wechselnde Signalanteile einer ersten Trägerfrequenz nahe der ersten Resonanzfrequenz $f_1$ und einer zweiten Trägerfrequenz nahe der zweiten Resonanzfrequenz $f_2$. Die beiden Sendesignale $S_1$, $S_2$ unterscheiden sich hinsichtlich der zeitlichen Abfolge. Bevorzugt ändern sich die Signalanteile mit einer Modulationsfrequenz $f_{mod}$, wobei sich die beiden Sendesignale $S_1$, $S_2$ in der Phase bezüglich dieser Frequenz $f_{mod}$ unterscheiden. Besonders bevorzugt sind zeitlich aufeinanderfolgende erste Signalabschnitte 40a der ersten Trägerfrequenz $f_1$ und zweite Signalabschnitte 40b der zweiten Trägerfrequenz $f_2$ gebildet.

Fig. 1

EP 1 925 914 A2

**Beschreibung**

Die Erfindung betrifft eine induktive Sensorvorrichtung und ein Verfahren zur induktiven Erfassung. Insbesondere betrifft die Erfindung eine Sensorvorrichtung sowie ein zugehöriges Verfahren, bei dem ein Signal mindestens einer Erregerspule durch mindestens zwei induktive Koppelelemente in mindestens eine Empfangsspule überkoppelt werden und aus einem an der Empfangsspule empfangenen Empfangssignal die Positionen der Koppelelemente ermittelt werden.

Derartige induktive Sensoren zur Ermittlung einer Position sowie abgeleiteten Größen (z. B. Geschwindigkeit) sind in vielfältiger Form für eine Vielzahl von Einsatzzwecken bekannt. Sie erfassen die Position eines induktiven Koppelelements innerhalb eines Meßbereiches, der bspw. linear oder kreis- bzw. bogenförmig sein kann. Der Meßbereich kann ein- oder auch mehrdimensional sein. Die Sende- und die Empfangsspule(n) erstrecken sich entlang des Meßbereiches so, daß mindestens eine der Spulen räumlich variiert, was zu einer positionsabhängigen Überkopplung durch das Koppelelement führt. Die Erregerspule(n) wird/werden mit einem Wechselstromsignal betrieben, das zur Erzeugung eines magnetischen Wechselfeldes an der bzw. den Erregerspule(n) führt. Das in Reichweite dieses Feldes angeordnete Koppelelement überkoppelt dieses Signal in die Empfangsspule(n).

In der WO03/038379 ist ein induktiver Sensor beschrieben, mit dem die relative Position eines Koppelelements zu einem Spulenschaltkreis ermittelt werden kann. Der Spulenschaltkreis umfaßt eine erste räumlich über den Meßbereich variierende Erregerspule (Sinus-Spule), eine zweite, von der ersten abweichend räumlich variierende Erregerspule (Cosinus-Spule) und eine Empfangsspule. Die Erregerspulen sind so geformt, daß sie bei Stromdurchfluß ein sinusoidal entlang der Meßrichtung variierendes Magnetfeld erzeugen, wobei der Verlauf der von den beiden Spulen erzeugten Felder räumlich phasenverschoben ist. Das Koppelelement ist als Resonanzkreis mit bestimmter Resonanzfrequenz ausgebildet.

Die Erregerspulen werden mit Sendesignalen angeregt. Diese entsprechen einem Trägersignal, dessen Frequenz der Resonanzfrequenz des Koppelelements entspricht und mit einem Modulationssignal einer deutlich niedrigeren Modulationsfrequenz moduliert ist. Den beiden Erregerspulen werden bezüglich der Modulationsfrequenz phasenverschobene Sendesignale zugeführt. Durch Anregung des Koppelelements auf seiner Resonanzfrequenz entsteht ein Resonanzsignal mit erhöhter Amplitude, dessen Phase von den verschiedenen Anteilen der Anregung durch die Sinus- und durch die Cosinus-Spule, und damit von seiner Position innerhalb des Meßbereiches abhängig ist. Das Empfangssignal wird durch die Empfangsspule empfangen und verarbeitet, indem es demoduliert und die Phase der Signalanteile auf der Modulationsfrequenz betrachtet wird. Aus dieser kann die Position des Koppelelements ermittelt werden.

In der WO03/038379 ist angegeben, daß mehrere Paare von Erregerspulen vorgesehen sein können, um eine zweidimensionale Erfassung zu ermöglichen. Es können auch mehrere Resonanzkreise als Koppelelemente vorgesehen sein, die sich hinsichtlich der Resonanzfrequenz unterscheiden.

In der WO2004/072653 sind eine Vorrichtung und ein Verfahren zur Ermittlung der Position oder Geschwindigkeit eines Gegenstandes beschrieben, wobei Meßfehler, die bei dem Verfahren nach WO03/038379 entstehen können, vermieden werden. Auch hier wird ein Resonanzkreis durch eine Sinus- und eine Cosinus-Spule mit einem modulierten Signal erregt und die Phase des resultierenden Signals hinsichtlich der Modulationsfrequenz ausgewertet. Die Sendesignale an den Erregerspulen enthalten Frequenzkomponenten einer ersten Trägerfrequenz im Bereich der Resonanzfrequenz des Koppelelements und einer zweiten Trägerfrequenz, die deutlich von der Resonanzfrequenz abweicht. Signalanteile beider Trägerfrequenzen werden mit der Modulationsfrequenz moduliert. Während die Signalanteile bei der Resonanzfrequenz zur Resonanz am Koppelelement und so zu einem starken Empfangssignal führen, aus dem die Position ermittelbar ist, dienen die Signalanteile bei der zweiten Trägerfrequenz dazu, im Empfangssignal enthaltene Rauschanteile schätzen und eliminieren zu können.

In der EP 1666 836 ist ein induktiver Sensor beschrieben, mit dem die absolute oder relative Drehposition zweier drehbarer Rotorelemente, die im Abstand voneinander an Wellenstücken einer Welle drehbar angeordnet sind, gegenüber einem Statorelement ermittelt wird. Die Wellenstücke sind elastisch miteinander verbunden, so daß aus der relativen Auslenkung das Drehmoment ermittelt werden kann. Zur Erfassung der Drehposition der Rotorelemente ist am Statorelement ein Spulenschaltkreis vorgesehen, der sich entlang eines Sensorbereiches um die Rotorelemente herum erstreckt. Die Rotorelemente weisen induktive Koppelelemente auf, die als Resonanzkreise unterschiedlicher Resonanzfrequenzen ausgebildet und so unterscheidbar sind.

Der Sensor arbeitet nach dem in WO03/038379 beschriebenen Prinzip. Es ist angegeben, daß, um die Position beider Koppelelemente detekticren zu können, der Spulenschaltkreis entweder zwei axial getrennte, ringförmige Spulenstrukturen aufweisen kann, die jeweils den Rotorelementen zugeordnet sind und diese auf ihrer jeweiligen Resonanzfrequenz anregen, oder daß ein Spulenschaltkreis mit einer gemeinsamen Spulenstruktur für beide Koppelelemente vorgesehen sein kann, Im letzten Fall werden die Spulen dann zeitlich versetzt einmal mit der einen und danach mit der anderen Resonanzfrequenz angeregt, so daß nacheinander die Position beider Koppelelemente ermittelt werden kann.

Es ist Aufgabe der Erfindung, eine induktive Sensorvorrichtung und ein Erfassungsverfahren anzugeben, mit denen auf einfache Weise die Positionen zweier induktiver Koppelelemente schnell und genau ermittelt werden können.

Diese Aufgabe wird gelöst durch eine Vorrichtung gemäß Anspruch 1 und ein Verfahren gemäß Anspruch 8. Abhängige Ansprüche beziehen sich auf vorteilhafte Ausführungsformen der Erfindung.

Erfindungsgemäß werden mindestens zwei Erregerspulen, die sich unterschiedlich räumlich variierend über einen Meßbereich erstrecken, mit zwei unterschiedlichen Sendesignalen erregt. Zwei induktive Koppelelemente sind als Resonanzelemente ausgebildet, wobei das erste induktive Koppelelement eine erste Resonanzfrequenz und das zweite induktive Koppelelement eine zweite Resonanzfrequenz aufweist. Die Koppelelemente dienen zur Überkopplung eines Signals der Erregerspulen in mindestens eine Empfangsspule.

Die Sendesignale enthalten in zeitlicher Abfolge wechselnde Signalanteile einer ersten und einer zweiten Trägerfrequenz. Diese Trägerfrequenzen sind so gewählt, daß sie im wesentlichen den Resonanzfrequenzen der beiden Koppelelemente entsprechen. Falls dennoch - bspw. durch Ungenauigkeiten oder Drift - ein Unterschied zwischen der exakten Resonanzfrequenz eines der Koppelelemente und der zugehörigen Trägerfrequenz besteht, so sollte die Trägerfrequenz dennoch so nahe an der Resonanzfrequenz liegen, daß sich eine deutliche Resonanzüberhöhung ergibt.

Die Sendesignale der beiden Erregerspulen unterscheiden sich dadurch, daß die zeitliche Abfolge, mit der die Signalanteile der beiden Trägerfrequenzen wechseln, zwischen den beiden Sendesignalen unterschiedlich ist.

Die erfindungsgemäße Lösung unterscheidet sich somit von früheren Lösungen, wie bspw. beschrieben in der EP 1666 836, bei denen die gesamte Vorrichtung, d. h. beide Erregerspulen, abwechselnd mit den beiden Trägerfrequenzen betrieben werden. Während bei einem solchen abwechselnden Betrieb eine Erfassung der beiden Koppelelemente jeweils nur intermittierend mit relativ großem zeitlichen Abstand erfolgen kann, erlaubt die erfindungsgemäße Lösung eine zeitlich deutlich engere Abfolge bis hin zu einer kontinuierlichen, gleichzeitigen Erfassung der Position beider Koppelelemente.

Für die Erfassung der Position zweier Koppelelemente kann dabei der aus WO03/038379 bekannte Grundaufbau der Spulen verwendet werden, d. h. es sind keine zusätzlichen Spulen erforderlich. Allerdings kann es bevorzugt sein, eine zweite Empfangsspule vorzusehen. Wie im Rahmen des Ausführungsbeispiels dargestellt wird, ist auch sowohl die Erzeugung entsprechender Sendesignale als auch die Auswertung eines gemeinsamen Empfangssignals einfach zu gewährleisten. Das Verfahren eignet sich sehr gut für die Umsetzung mit Hilfe digitaler Signalverarbeitung.

Die genaue Erfassung der Position von zwei, durch die abweichende Resonanzfrequenz elektrisch unterscheidbaren Koppelelementen ist für eine Vielzahl von Anwendungen vorteilhaft. Einerseits kann auf diese Weise eine für sicherheitskritiscbe Anwendungen gewünschte Redundanz erzielt werden. Bspw. für Sensoren im Kfz-Bercich können die beiden Koppelelemente gemeinsam an einem zu erfassenden Element angeordnet sein, so daß zwei Meßwerte für die Position dieses Elements ermittelt werden (und bei Ausfall eines der Koppelelemente weiterhin ein korrekter Wert zur Verfügung steht). Andererseits kann aber auch die Position zweier Elemente, die jeweils mit einem der Koppelelemente bestückt sind, gleichzeitig ermittelt werden, so daß der Aufwand an benötigten Spulen verringert wird und bspw. Differenzmessungen, wie sie für die Drehmomentermittlung notwendig sind, möglich werden.

Die Sendesignale können hierbei in vielfältiger Weise die in zeitlicher Abfolge wechselnden Signalanteile der beiden Trägerfrequenzen aufweisen. Die wechselnde zeitliche Abfolge bezieht sich bevorzugt auf die Amplitude der jeweiligen Signalanteile.

Gemäß einer Weiterbildung der Erfindung ändern sich die Signalanteile in den beiden Sendesignalen gemäß einer gemeinsamen Modulationsfrequenz. Allerdings unterscheidet sich der Wechsel in den beiden Sendesignalen bezüglich dieser Modulationsfrequenz in der Phase. Die Modulationsfrequenz gibt somit den Wechsel vor, mit dem sich die Anteile (bevorzugt: die Amplitude) bei der ersten Trägerfrequenz gegenüber denen bei der zweiten Trägerfrequenz periodisch verändert. Dadurch, daß die jeweilige zeitliche Abfolge der beiden Sendesignale bekannt ist, kann bei der Signalauswertung erkannt werden, welche Anteile des Empfangssignals auf eine (phasenrichtige oder gegenphasige) Kopplung mit der ersten und welche auf eine Kopplung mit der zweiten Spule zurückgehen. Hieraus und aus der Kenntnis der räumlichen Variation der Erregerspulen (bevorzugt so, daß sich ein periodisch variierender, besonders bevorzugt im wesentlichen sinusförmiger räumlicher Verlauf ergibt) kann die Position des jeweils für die Überkopplung verantwortlichen, frequenzselektiven Koppelelements ermittelt werden.

Gemäß einer besonders bevorzugten Weiterbildung der Erfindung sind die Sendesignale als zeitlich aufeinanderfolgende erste und zweite Signalabschnitte gebildet, wobei die ersten Signalabschnitte als Schwingungen der ersten Trägerfrequenz und die zweiten Signalabschnitte als Schwingungen der zweiten Trägerfrequenz gebildet sind. Die jeweiligen Signalabschnitte können zusätzlich andere Frequenzanteile enthalten, bspw. Oberschwingungen. In dieser bevorzugten Ausgestaltung sind jedoch im ersten Signalabschnitt keine Anteile der zweiten Trägerfrequenz, und umgekehrt im zweiten Signalabschnitt keine Anteile der ersten Trägerfrequenz enthalten. Die Abfolge der Signalabschnitte erfolgt mit der Modulationsfrequenz, die bevorzugt deutlich niedriger ist als die Trägerfrequenzen, bspw. um den Faktor 10 oder mehr, bevorzugt 100 oder mehr. Die Signalabschnitte zwischen den beiden Sendesignalen sind hierbei zueinander zeitverschoben (was einer Phasenverschiebung bezüglich der Modulationsfrequenz entspricht). Während andere Phasenverschiebungen möglich sind, ist es besonders bevorzugt, daß die Phasenverschiebung so gewählt ist, daß der Wechsel von einem ersten Signalabschnitt zu einem zweiten Signalabschnitt in der ersten Erregerspule zeitlich einem mittleren Bereich eines ersten oder zweiten Signalabschnitts an der zweiten Spule entspricht. So ist gewährleistet, daß eine zeitlich besonders enge Verzahnung erzielt wird. Besonders bevorzugt ist eine digitale Modulation, bei der in einer Periode der Modulationsfrequenz zwei Signalabschnitte angeordnet sind. Von diesen sind der erste und der zweite von unterschiedlicher Frequenz. Die Phasenverschiebung zwischen den Sendesignalen der beiden Erregerspulen entspricht bevorzugt 90°, bezogen auf die Modulationsfrequenz.

Bezüglich der Signalauswertung ist gemäß einer Weiterbildung der Erfindung vorgesehen, daß die (mindestens eine) Empfangsspule an eine Auswerteeinheit angeschlossen ist. Diese ermittelt aus dem Empfangssignal die Position der Koppelelemente. Die Auswerteeinheit ist so ausgebildet, daß das Empfangssignal demoduliert wird, um ein erstes und ein zweites demoduliertes Signal zu erhalten, deren Frequenz im wesentlichen der Modulationsfrequenz entspricht. Das erste und zweite demodulierte Signal entsprechen hierbei dem zeitlichen Verlauf der Signalanteile bei der ersten und bei der zweiten Trägerfrequenz. Aus der Phase jedes der demodulierten Signale kann die Position des jeweils zugeordneten Koppelelements ermittelt werden. Die Demodulation kann bevorzugt durch Synchrondetektion erfolgen, wobei ein Komplementärsignal der jeweiligen Trägerfrequenzen verwendet wird. Alternativ sind aber auch andere Demodulationsverfahren anwendbar. Es ist möglich, daß nur eine Empfangsspulc an die Auswerteeinheit angeschlossen ist, wobei aus den dort empfangenen Signalen die Position beider Koppclclemente ermittelt wird. Bevorzugt ist, daß zwei getrennte Empfangsspulen an die Auswerteeinheit angeschlossen sind, wobei aus dem in der ersten Empfangsspule empfangenen Signal die Position des ersten Koppelelements, und aus dem in der zweiten Empfangsspule empfangenen Signal die Position des zweiten Koppelelements ermittelt wird.

Zur Erfassung der Position eines Bewegungselementes gegenüber einem Statorelement wird bevorzugt, daß das Statorelcment einen Spulenschaltkreis mit den Erregerspulen und der Empfangsspule aufweist. Der Spulenschaltkreis ist bevorzugt flach auf einem Träger, bspw. einer Leiterplatte oder einem flexiblen Material gebildet und kann auch weitere Spulen enthalten. Auf einem gegenüber dem Statorelement beweglichen Bewegungselement ist mindestens eines der induktiven Koppelelemente angebracht. Die Erregerspulen sind angeschlossenen an einen Signalgenerator zur Erzeugung und Zuführung der Sendesignale. Die Empfangsspule ist an eine Auswerteeinheit zur Auswertung des Empfangssignals und zur Ermittlung der Position der Koppelelemente und hieraus der Position des Bewegungselements angeschlossen. Der Signalgenerator und die Auswerteeinheit sind bevorzugt direkt gekoppelt, so daß die für die Erzeugung der Sendesignale verwendeten Grundsignale auch bei der Auswertung des Empfangssignals verwendet werden, bspw. für die Synchrondetektion und die Phasendetektion. Besonders bevorzugt sind die beiden Einheiten in einer gemeinsamen Baueinheit enthalten, die weiter bevorzugt als integrierte Schaltung (ASIC) ausgebildet ist.

Die Erfassung des Bewegungselements erfolgt hierbei jeweils über den Meßbereich, wobei dieser sich entlang einer Gerade erstrecken kann (Linearsensor), in einem Kreis oder Kreisbogen (Rotationssensor), oder eine hiervon abweichende Form aufweisen kann.

Gemäß einer Weiterbildung der Erfindung ist eine Vorrichtung zur redundanten Erfassung der Position eines Bewegungselementes gegenüber einem Statorelement gebildet, indem am Bewegungselement die beiden induktiven Koppelelemente angebracht sind. Aus dem Empfangssignal werden die Positionen der Koppelelemente und hieraus - redundant - die Position des Bewegungselements ermittelt. Durch Vergleich der Meßwerte und Feststellung von Abweichungen kann eine Funktionsüberwachung erfolgen.

Eine alternative Erfassungsvorrichtung dient zur Erfassung der Position zweier Bewegungselemente gegenüber einem Statorelement. Hierbei ist auf jedem der Bewegungselemente eines der induktiven Koppelelemente angebracht. Aus dem Empfangssignal werden die Positionen der Koppelelemente und damit die der Bewegungselemenle ermittelt. So können bspw. auf einfache und genaue Weise Differenzbewegungen erfaßt werden. Da identische Spulen und weitgehend identische Signalpfade verwendet werden, sind systematische Fehler minimiert. Durch weitere Koppelemente kann zudem auch hier eine redundante Erfassung erfolgen.

Gemäß einer Weiterbildung der Vorrichtung zur Erfassung der Position zweier Bewegungselemente sind die Bewegungselemente auf axial beabstandeten Abschnitten einer Welle angeordnet, die sich bei Drehung der Welle gegenüber dem Statorelement bewegen. Die Wellenabschnitte sind elastisch miteinander verbunden, so daß sie sich bei einem Drehmoment an der Welle so gegeneinander verdrehen, daß sich eine Bewegungsdifferenz der Bewegungselement ergibt, d. h. daß sich die relative Ausrichtung der Bewegungselemente zueinander abhängig von dem an der Welle anliegenden Drehmoment ändert. Die Auswerteeinheit ermittelt in diesem Fall bevorzugt die Bewegungsdifferenz, die als Maß für das anliegende Drehmoment dienen kann.

Nachfolgend werden Ausführungsformen der Erfindung anhand von Zeichnungen näher beschrieben. Hierbei zeigen:

Fig. 1        in schematischer, perspektivischer Darstellung einen induktiven Sensor mit zwei induktiven Koppelelementen und einem Spulenschaltkreis;

Fig. 2a-2c   in schematischer Darstellung Flachspulen-Topologien einer ersten Erregerspule, einer zweiten Erregerspule sowie einer Empfangsspule;

Fig. 3        eine schematische Darstellung des Zusammenwirkens zweier Erregerspulen und einer Empfangsspule mit zwei induktiven Koppelelementen;

Fig. 4     in symbolischer Darstellung Elemente einer elektrischen Schaltung mit Signalgenerator und Auswerteeinheit;

Fig. 5     in Diagrammform eine schematische Darstellung von Zeitverläufen eines ersten und eines zweiten Sendesignals;

Fig. 6     in Diagrammform schematische Darstellungen von Zeitverläufen verschiedener Signale der Schaltung aus Fig. 4;

Fig. 7a     in schematischer Frontansicht ein Statorelement eines induktiven Drehwinkelsensors;

Fig. 7b     in schematischer Frontansicht eine erste Ausführungsform eines Rotorelements des induktiven Drehwinkelsensors aus Figur 7a;

Fig. 7c     in schematischer Frontansicht eine zweite Ausführungsform eines Rotorelements des induktiven Drehwinkelsensors aus Fig. 7a;

Fig. 8     in perspektivischer Darstellung Elemente eines Drehmoment-Sensors an einer Welle und

Fig. 9     in schematischer Darstellung einen Längsschnitt durch die Welle mit dem Drehmoment-Sensor aus Fig. 8;

Fig. 10     in symbolischer Darstellung Elemente einer alternativen Ausführungsform einer elektrischen Schaltung mit Signalgenerator und Auswerteeinheit.

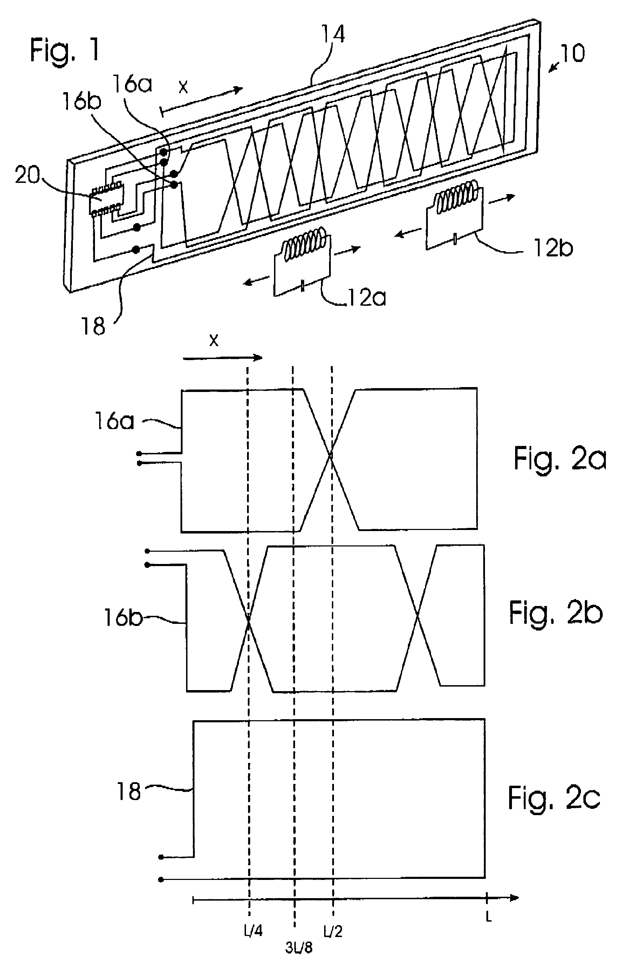

Figur 1 zeigt in schematischer Form eine induktive Sensorvorrichtung 10, mit der die Position zweier Koppelelemente 12a, 12b entlang eines linearen Meßbereiches X ermittelt werden kann. Eine Leiterplatte 14 trägt einen Spulenschaltkreis, der eine erste Erregerspule 16a (Sinus-Spule), eine zweite Erregerspule 16b (Cosinus-Spule) und eine Empfängerspule 18 umfaßt. Sämtliche Spulen sind als flache Leiterbahnen auf der Leiterplatte 14 aufgebracht und an eine Betriebs- und Auswerteschaltung (ASIC) 20 angeschlossen.

Die Erregerspulen 16a, 16b verlaufen in einem solchen Muster entlang des linearen Meßbereiches X, daß sich bei Stromdurchfluß durch die Spulen ein in X-Richtung sinusförmig variierendes magnetisches Feld ergibt. Hierbei sind die Spulen 16a, 16b räumlich zueinander phasenverschoben, weshalb sie als Sinus- bzw. Cosinus-Spule bezeichnet werden.

Die induktiven Koppelelemente 12a, 12b sind als Resonanzkreise mit einer Induktivität und einer Kapazität gebildet, so daß sie eine Resonanzfrequenz im MHz-Bereich aufweisen. Die Resonanzfrequenzen der beiden induktiven Koppelelemente 12a, 12b unterscheiden sich hierbei; in diesem Beispiel liegt die Resonanzfrequenz des ersten Koppelelementes 12a bei $f_1$ = 2,6 MHz, die Resonanzfrequenz des zweiten Koppelelementes 12b bei $f_2$ = 4 MHz.

Der Aufbau des Spulenschaltkreises (im folgenden bezeichnet als Pad) mit den Erregerspulen 16a, 16b und der Empfängerspule 18 und den Koppelelementen (im folgenden bezeichnet als Puck) entspricht dem in WO 03/038379 beschriebenen Sensor mit dem Unterschied, daß statt dort nur einem, in diesem Fall zwei Pucks 12a, 12b vorhanden sind. Daher werden im folgenden diese Elemente nur in Grundzügen beschrieben und bezüglich weiterer Details auf die oben genannte Druckschrift verwiesen.

Figuren 2a-2c zeigen beispielhaft einen Verlauf der die Spulen 16a, 16b, 18 bildenden Leiterbahnen, die entlang des Meßbereiches in X-Richtung räumlich variieren. Die in Figur 2a-2c gezeigten Spulen weisen hierbei lediglich eine einzige Periode auf, die sich über die Länge L erstreckt. Bei dem in Figur 1 gezeigten Spulenschaltkreis hingegen wiederholt sich das Muster der räumlich variierenden Spulen 16a, 16b mehrfach hintereinander.

Im Betrieb des Sensors 10 werden die Erregerspulen 16a, 16b vom ASIC 20 jeweils mit Wechselstrom-Sendesignalen betrieben, die Signalkomponenten einer ersten Trägerfrequenz $f_1$ und einer zweiten Trägerfrequenz $f_2$ enthalten. Wie in WO 03/038379 für einen Puck erläutert, regt das von den beiden mit dem Sendesignal betriebenen Spulen 16a, 16b resultierende Magnetfeld den jeweiligen Puck 12a, 12b zur Resonanz an und führt zu einem (phasenverschobenen) Empfangssignal in der lediglich als Leiterschleife ausgebildeten Empfangsspule 18. Durch die überkreuzende Struktur der Erregerspulen 16a,16b mit räumlich abwechselnden positiven und negativen Flächenbereichen ist der Spulenschaltkreis selbst in Balance, so daß eine direkte Überkopplung eines der Sendesignale an den Erregerspulen 16a, 16b in die Empfängerspule 18 weitgehend vermieden wird. Ein an der Empfangsspule 18 empfangenes Signal $R_x$ geht daher auf die Überkopplung durch die Pucks 12a, 12b zurück.

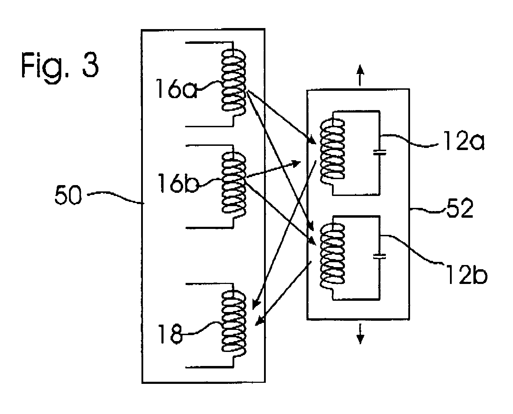

Figur 3 zeigt symbolisch das Zusammenwirken der Spulen 16a, 16b, 18 des Pad mit den Pucks 12a, 12b. Jeder der beiden Pucks 12a, 12b wird von den Sendesignalen jeder der beiden Erregerspulen 16a, 16b angeregt. Das je nach Anregung resultierende Signal beider Pucks 12a, 12b überlagert sich in der Empfangsspule 18 zu einem Summensignal $R_x$. Durch die Ausbildung als Resonanzkreis wirken die Pucks 12a, 12b hierbei frequenzselektiv, d.h. der erste Puck 12a wird nur von solchen Komponenten der beiden Sendesignale der Erregerspulen 16a, 16b erregt, die auf (bzw. hinreichend nahe bei) seiner Resonanzfrequenz $f_1$ liegen. Daher wird die vom ersten Puck 12a herrührende Komponente des in der Empfängerspule 18 empfangenen Summensignals $R_x$ entsprechend auf die Signalanteile bei der Frequenz $f_1$ zurückgehen. Spiegelbildlich gilt dasselbe für den zweiten Puck 12b und dessen Resonanzfrequenz $f_2$.

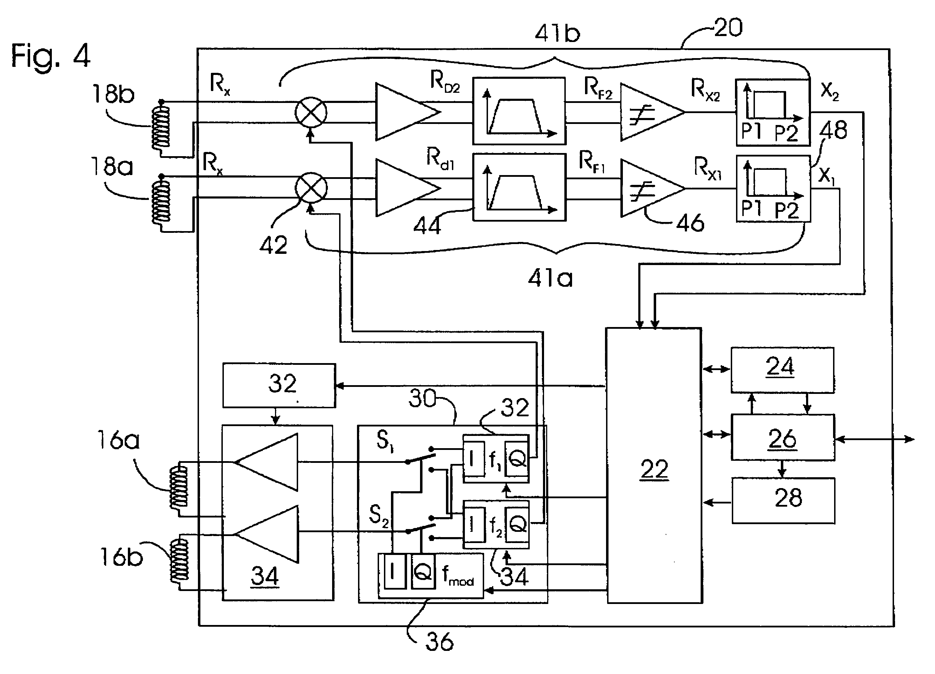

Nachfolgend werden Aufbau und Funktionsweise des ASIC 20 erläutert. Der ASIC 20, dessen innerer Aufbau in Figur 4 symbolisch dargestellt ist, dient einerseits als Signalgenerator zur Versorgung der Erregerspulen 16a, 16b mit den jeweiligen Sendesignalen. Andererseits dient der ASIC 20 auch als Auswerteschaltung mit der das in Empfangsspulen 18a, 18b empfangene Empfangssignal ausgewertet und hieraus die Positionen der Pucks 12a, 12b ermittelt werden. Statt einer einzelnen Empfangsspule 18 sind hier zwei Empfangsspulen 18a,18b vorgesehen, die jeweils separat an Signalverarbeitungsstränge 41a, 41b angeschlossen sind. Die beiden Stränge 41a, 41b sind auf diese Weise voneinander getrennt, so daß evtl. Beeinflussungen der Signale ausgeschlossen sind. Dies rechtfertigt den leicht erhöhten Aufwand, der durch eine zusätzliche Empfangsspulenstruktur entsteht. Die beiden getrennten Empfangsspulen 18a, 18b können von Form und Anordnung identisch sein, es ist aber bevorzugt, sie räumlich den beiden Koppelelementen zugeordnet anzubringen, so daß das empfangene Signal des jeweils zugeordneten Koppelelements in jeder Spule besonders gut empfangen wird.

Der ASIC 20 verfügt über einen zentralen Prozessor 22 in dem, wie nachfolgend erläutert wird, die Vorgaben für die Erregersignale gemacht werden und die aus dem Empfangssignal erhaltenen Positionswerte verwaltet werden. Die Zentraleinheit 22 arbeitet hierbei mit einem Speicher 24. Über eine Schnittstelle 26 erfolgt die Kommunikation mit der Außenwelt. Eine Versorgungseinheit 28 dient zur Speisung der Zentraleinheit 22. Die Schnittstelle 26 ist bevorzugt ein Strom-Interface, bei der der zum Betrieb des ASIC 20 bereitgestellte Betriebsstrom (Gleichstrom) aufmodulierte (Wechselstrom-) Anteile aufweist, in denen Daten kodiert sind. Die Schnittstelle 26 leitet den Betriebsstrom an die Versorgungseinheit 28 weiter, während aufmodulierte Daten demoduliert und an den Speicher 24 oder die Zentraleinheit 22 gegeben werden.

Auf der Sendeseite des ASIC 20 sind ein Mustergenerator 30, eine Sendespnnnungsversorgung 32 und eine Treiberschaltung 34 vorgesehen, an die die Erregerspulen 16a, 16b angeschlossen sind. Die Zentraleinheit 22 steuert den Mustergenerator 30 zur Erzeugung von zwei Sendesignalen $S_1$, $S_2$ an. In dem als Brückentreiber ausgebildeten Treiberbaustein 34, der von der Sendespannungsversorgung 32 versorgt wird, werden die Sendesignale $S_1$, $S_2$ entsprechend verstärkt und den Erregerspulen 16a, 16b zugeführt.

Innerhalb des Mustergenerators 30 liefert ein erster Oszillator 32 ein digitales Oszillatorsignal (Pulssignal) der Frequenz $f_1$. Dieses Signal wird einmal phasenrichtig über einen Ausgang I und zusätzlich 90° phasenverschoben über einen Ausgang Q abgegeben. In gleicher Weise liefert ein zweiter Oszillator 34 ein digitales Oszillatorsignal der Frequenz $f_2$.

Ein dritter Oszillator 36 liefert ebenfalls ein digitales Oszillatorsignal einmal phasenrichtig (I) und einmal mit einer Phasenverschiebung von 90° (Q) einer Modulationsfrequenz $f_{mod}$. Die Modulationsfrequenz liegt erheblich niedriger als die Trägerfrequenzen $f_1$, $f_2$. Bevorzugt wird $f_{mod}$ im kHz-Bereich gewählt, im gezeigten Beispiel beträgt $f_{mod}$ = 4 kHz.

Während in Fig. 4 Oszillatoren 32, 34, 36 unterschiedlicher Frequenz als separate Einheiten gezeigt sind, ist es bevorzugt, daß diese Oszillationssignale alle aus einem gemeinsamen Grundtakt erzeugt werden. Dieser beträgt im gezeigten Beispiel 16 MHz. Hieraus erzeugt die Zentraleinheit 22 durch entsprechende digitale Frequenzteiler die Signale der Oszillatoren.

Innerhalb des Mustergenerators 30 werden aus den Oszillatorsignalen die Sendesignale $S_1$, $S_2$ erzeugt. Für das für die erste Erregerspule 16a bestimmte erste Sendesignal $S_1$ werden die beiden Oszillatorsignale digital mit dem phasenrichtigen (I) Modulationssignal gemischt. Zur Erstellung des für die zweite Erregerspule 16b bestimmten zweiten Sendesignals $S_2$ erfolgt ebenfalls eine digitale Mischung der beiden Trägersignale, allerdings mit dem phasenverschobenen (Q) Modulationssignal. Die digitale Mischung der Oszillatorsignale bei den Trägerfrequenzen $f_1$, $f_2$ erfolgt im gezeigten Beispiel besonders vorteilhaft alternierend, d. h. jedes der Signale $S_1$, $S_2$ besteht abwechselnd aus Signalanteilen der ersten Trägerfrequenz $f_1$ und der zweiten Trägerfrequenz $f_2$.

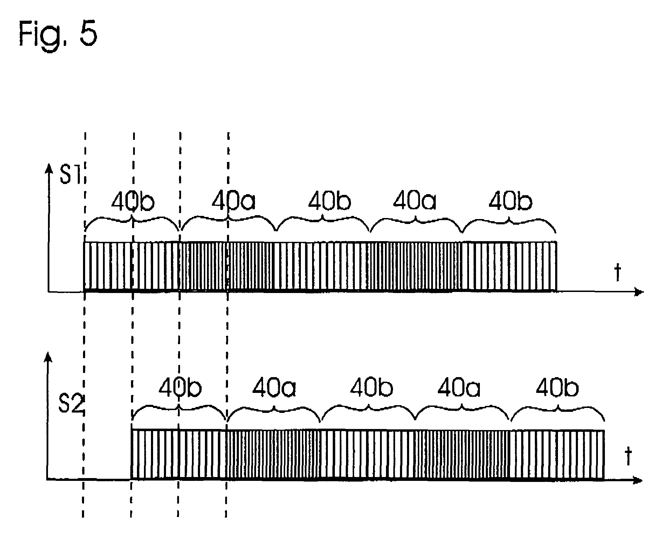

In Figur 5 ist schematisch der Zeitverlauf der Sendesignale $S_1$ und $S_2$ dargestellt. Jedes der Signale umfaßt abwechselnd erste Signalabschnitte 40a der ersten Trägerfrequenz $f_1$ und zweite Signalabschnitte 40b der zweiten Trägerfrequenz $f_2$, Die jeweiligen Abschnitte folgen periodisch aufeinander. Jeweils zwei Abschnitte bilden eine Periode der Modulationsfrequenz $f_{mod}$.

Wie aus Figur 5 erkennbar, handelt es sich bei den Sendesignalen $S_1$, $S_2$ um vollständig digital modulierte Versionen der Oszillatorsignale auf den beiden Frequenzen $f_1$, $f_2$. Die Zeitpunkte, während derer die jeweiligen Signalanteile vollständig ausgeschaltet sind, entsprechen der digitalen Multiplikation mit o; die eingeschalteten Bereiche entsprechen einer Multiplikation mit 1. Somit ist das modulierte Signal beider Frequenzen ständig und ununterbrochen in beiden Signalen $S_1$, $S_2$ vorhanden. Die Signalanteile auf den beiden Trägerfrequenzen werden somit tatsächlich gleichzeitig ausgesendet. Entsprechend erfolgt auch eine Anregung der Pucks 12a, 12b kontinuierlich, so daß nicht lediglich intermittierend die Feststellung von deren Position erfolgt, sondern - soweit dies in der digitalen Domäne möglich ist - kontinuierlich.

Mit den so gebildeten Sendesignalen werden die Erregerspulen 16a, 16b betrieben. Die von diesen erzeugten Magnetfelder regen über das resultierende Magnetfeld jeden der Pucks 12a, 12b an. Hierbei führen diejenigen Signalkomponenten, die der Resonanzfrequenz des jeweiligen Pucks entsprechen, zu einer Resonanzüberhöhung und so zu einem zurückgesendeten Signal, das von den Empfangsspulen 18a, 18b aufgenommen wird.

Wie in WO 03/038379 im Detail erläutert, ist die Phasenlage (bezogen auf die Modulationsfrequenz $f_{mod}$) des zurückgesandten Signals abhängig von der Position des Pucks innerhalb des Meßbereiches. Entsprechend ist dies der Fall für den vorliegenden Sensor mit zwei Pucks. Läßt man die im vorliegenden Beispiel gewählte digitale Ausführung außer Betracht und nimmt stattdessen kontinuierlich sinusförmige Zeitverläufe an, so entspricht das von den Pucks zurückgesendete und in den Empfangsspulen 18a, 18b empfangene Empfangssignal $R_x$ bei einer Position $x_1$ (innerhalb des Meßbereichs o-L, siehe Fig. 2a-2c) des ersten Pucks 12a und einer Position $x_2$ des zweiten Pucks 12b dem folgenden Term.:

$$R_x = \cos 2\pi f_1 t \, \cos\left(2\pi f_{mod}\, t - 2\pi\, \frac{x1}{L}\right) + \cos 2\pi f2\, t \, \cos\left(2\pi f_{mod}\, t - 2\pi\, \frac{x2}{L}\right)$$

$$+ \sin 2\pi f_1 t \, \sin\left(2\pi f_{mod}\, t - 2\pi\, \frac{x1}{L}\right) + \sin 2\pi f2\, t \, \sin\left(2\pi f_{mod}\, t - 2\pi\, \frac{x2}{L}\right)$$

Das Empfangssignal $R_x$ besteht somit aus einer additiven Überlagerung zweiter Terme, von denen der erste eine modulierte Variante eines Signalanteils bei der ersten Trägerfrequenz $f_1$ ist und (in seiner Phase bezüglich $f_{mod}$) die Position $x_1$ des ersten Pucks 12a angibt und entsprechend der zweite Term ein modulierter Signalanteil der zweiten Trägerfrequenz $f_2$ ist und in seiner Phase die Information über die Position $x_2$ des zweiten Pucks 12b enthält.

Das Empfangssignal $R_x$ wird innerhalb des ASIC 20 verarbeitet und hinsichtlich der beiden darin enthaltenen Positionsinformationen $x_1$, $x_2$ ausgewertet. Im gezeigten Beispiel erfolgt die Bearbeitung in zwei parallelen, identischen Strängen 41a, 41b von denen im folgenden zunächst nur der erste, in der Darstellung von Figur 4 untere Zweig 41a beschrieben wird.

Das Empfangssignal $R_x$ wird in einem Mischer 42 mit dem Komplementärsignal Q der ersten Trägerfrequenz $f_1$ gemischt, was einer Synchrongleichrichtung der Signalanteile bei dieser Frequenz entspricht. Das so hinsichtlich der Frequenz $f_1$ demodulierte Signal $R_{D1}$ wird verstärkt, in einem Bandpassfilter 44 gefiltert um ein gefiltertes Signal $R_{F1}$ zu erhalten. Das analoge, sinusförmige Signal $R_{F1}$ wird durch den Schwellwertdetektor 46 zu einem Detektionssignal $R_{X1}$. Die Frequenz des digitalen Signals $R_{X1}$ entspricht der Modulationsfrequenz $f_{mod}$. In einem Phasendetektor 48 wird die Phasenlage des Signals $R_{X1}$ ermittelt, was auf sehr einfache Weise durch einen digitalen Zähler geschehen kann, wie in WO 03/038379 beschrieben. Diese stellt ein Maß für die Position $x_1$ des ersten Pucks 12a dar und wird der Zentraleinheit 22 zugeführt.

In gleicher Weise wird das Empfangssignal $R_x$ im zweiten Strang 41b hinsichtlich der zweiten Modulationsfrequenz $f_2$ verarbeitet. Durch die auf die verschiedenen Trägerfrequenzen $f_1$, $f_2$ abgestimmte Signalverarbeitung in den beiden Zweigen 40a, 40b wird so das Frequenzgemisch innerhalb des Signals $R_x$ effektiv wieder aufgetrennt, so daß zwei getrennte Signale $R_{X1}$, $R_{X2}$ ermittelt werden, aus deren Phase die Position $x_1$, $x_2$ ermittelt werden kann.

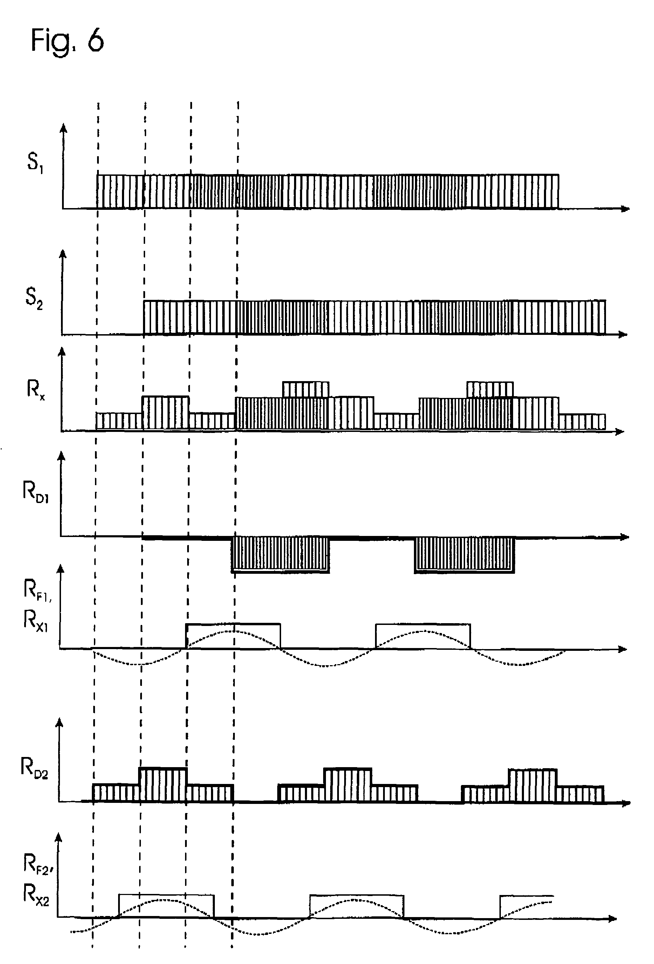

Die Signalverarbeitung wird nachfolgend am Beispiel der Signalverläufe in Figur 6 erläutert. Hierbei sind in den beiden oberen Diagrammen die Sendesignale $S_1$, $S_2$ dargestellt. Im dritten Diagramm ist das Empfangssignal $R_x$ symbolisch dargestellt, das Signalkomponenten bei der ersten Trägerfrequenz $f_1$ ebenso wie solche bei der zweiten Trägerfrequenz $f_2$ enthält. Durch den ersten Verarbeitungszweig 41a des ASIC 20 wird von diesem Summensignal $R_x$ der Anteil der ersten Trägerfrequenz $f_1$ verarbeitet. Die Demodulation und Bandpass-Filterung liefert das auf den ersten Puck 12a zurückgehende demodulierte Hüllkurven-Signal $R_{D1}$. Hieraus wird durch Filterung das gefilterte Signal $R_{F1}$ (gestrichelte Darstellung) erzeugt. In gleicher Weise liefert der zweite Zweig 41b des Empfangsteils des ASIC 20 das auf die Position des zweiten Pucks 12b zurückgehende demodulierte Hüllkurven-Signal $R_{D2}$ aus dem durch Tiefpass-Filterung das gefilterte sinusförmige Signal $R_{F2}$ (gestrichelt) entsteht.

Die gefilterten Signale $R_{F1}$, $R_{F2}$ werden durch den Schwellwertdetektor 46 in digitale Komperatorsignale $R_{X1}$, $R_{X2}$ (Darstellung mit durchgezogenen Linien) umgewandelt. Die Phasenlage dieser digitalen Signale kann besonders einfach ermittelt werden, indem ausgehend vom Start der Periode (deren Zeitpunkt bekannt ist aus dem Signal des Oszillators 36 der Modulationsfrequenz $f_{mod}$) ein kontinuierlich laufender Zähler die Zeit bis zum Flankenwechsel der Komperatorsignale $R_{X1}$, $R_{X2}$ zählt. Die so erhaltenen Zählerwerte $x_1$, $x_2$ zeigen die Positionen der Pucks 12a, 12b an. Auf diese Weise kann mit einem einzigen Pad unabhängig voneinander die Position zweier Pucks 12a, 12b entlang des Meßbereiches ermittelt werden.

Dies kann einerseits ausgenutzt werden, um bei der Positionserfassung eine Redundanz zu erhalten. Schematisch ist dies in Figur 3 angedeutet. Im gezeigten Fall ist statt der getrennten Empfangsspulen 18a, 18b nur eine Empfangsspule 18 vorgesehen. Die drei das Pad bildenden Spulen 16a, 16b, 18 sind auf einem Statorelement 50 angebracht. Ein Bewegungselement 52 bewegt sich linear gegenüber dem Statorelement 50. Auf dem Bewegungselement 52 sind die beiden Koppelelemente 12a, 12b fest angebracht. Mit der oben geschilderten Signalauswertung werden somit für die Bewegung des Bewegungselements 52 zwei Meßwerte ermittelt, die bei korrekter Funktion (abgesehen von den in dem Beispiel gezeigten unterschiedlichen Anbringungsstellen) übereinstimmen.

Fehlfunktionen lassen sich auf diese Weise einfach an deutlichen Abweichungen der ermittelten Werte erkennen.

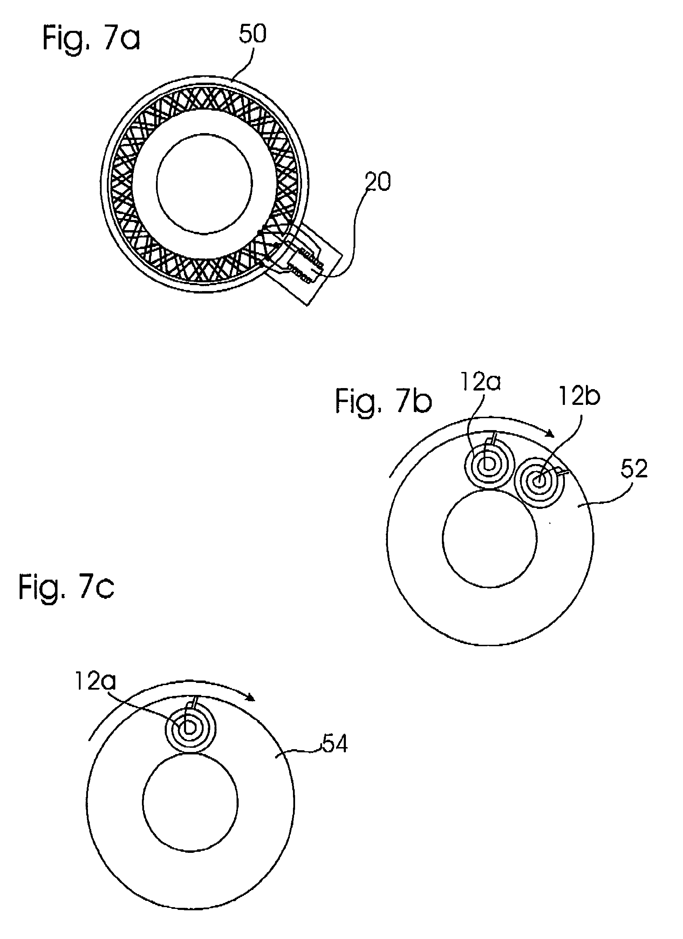

Statt eines Linearsensors wie in Figur 1 gezeigt, kann mit dem beschriebenen Sensorprinzip auf einfache Weise auch ein Drehwinkelsensor verwirklicht werden. Figur 7 zeigt in schematischer Form ein entsprechendes Statorteil 50 in Form einer Leiterplatte mit darauf angebrachten Spulenschaltkreis (Pad), der an einen ASIC 20 angeschlossen ist. Die Leiterbahnen, die in Figur 7a nur symbolisch dargestellt sind, bilden auch hier zwei räumlich unterschiedlich variierende Erregerspulen und eine als Leiterschleife ausgebildete Empfängerspule, wobei die Spulenstruktur entlang des in diesem Fall ringförmigen Meßbereiches angeordnet ist.

Dem Stator 50 kann einerseits eine erste Ausführung eines Rotors 52 zugeordnet sein, wie er in Figur 7b dargestellt ist. Der Rotor 52 wird konzentrisch auf dem Stator 52 plaziert. Er trägt zwei Pucks 12a, 12b. Der Rotor 52 ist in Pfeilrichtung gegenüber dem Stator 50 drehbar. Die (Dreh)-Position der Pucks 12a, 12b kann mit der Auswerteschaltung 20 ermittelt werden. So kann die Drehposition des Rotors 52 gegenüber dem Stator 50 redundant ermittelt werden.

In einer alternativen Ausgestaltung trägt ein Rotor 54 lediglich einen Puck 12a. Allerdings sind zwei Rotorelemente 54 vorhanden, wobei das zweite Rotorelement (nicht dargestellt) den zweiten Puck 12b trägt. Die beiden Rotorelemente werden beidseitig am ringförmigen Pad 50 positioniert und können sich unabhängig voneinander gegenüber dem Stator 50 drehen. Nun können die Drehpositionen beider Rotorelemente abgefragt werden.

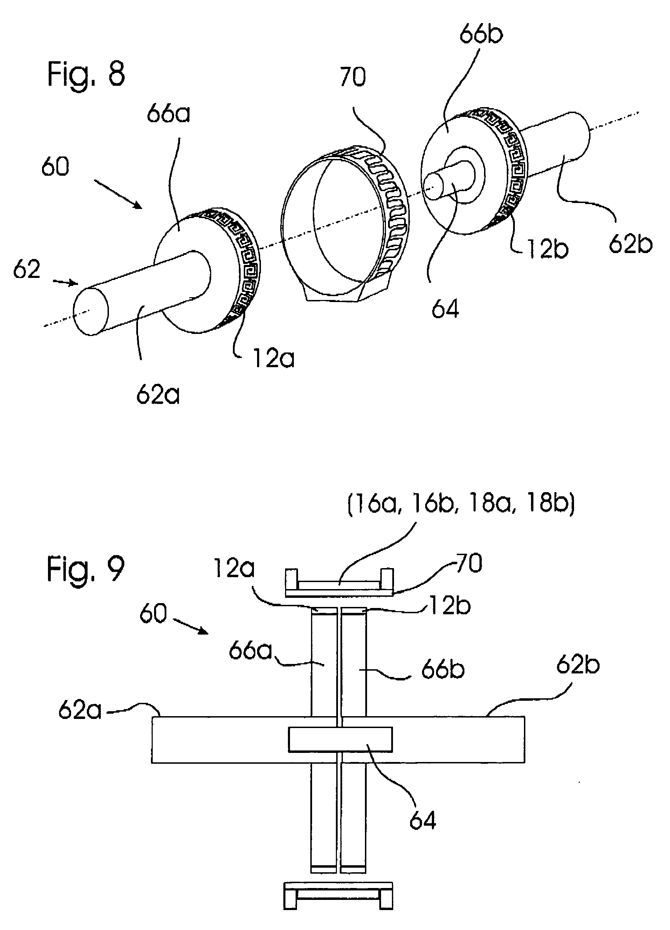

Figur 8, Figur 9 zeigen als weitere mögliche Anwendung des beschriebenen Sensorprinzips einen induktiven Drehmomentsensor 60, wie er bspw. an der Lenkwelle eines Kfz verwendet werden kann. Eine Welle 62 besteht aus einem ersten Wellenstück 62a und einem zweiten Wellenstück 62b, die über einen elastischen Abschnitt 64 so miteinander verbunden sind, daß sie sich bei einem Drehmoment gegeneinander verdrehen. Am ersten Wellenstück 62 ist ein radförmiges erstes Rotorelement 66a und am zweiten Wellenstück 62b ein ebenso geformtes zweites Rotorelement 66b angeordnet. Diese tragen entlang des Umfangs eine Spulenstruktur, wobei die Enden der Spulenstruktur durch einen Kondensator verbunden sind, so daß ein Resonanzkreis gebildet ist. Die Spulenstrukturen der beiden Rotoren 66a, 66b sind identisch, durch die Bestückung mit unterschiedlichen Kondensatoren ergeben sich aber Resonanzelemente 12a, 12b unterschiedlicher Resonanzfrequenzen.

Ein ringförmiger Stator 70 ist vorgesehen, entlang dessen Umfang ein Spulenschaltkreis (Pad mit zwei separaten Empfangsspulen 18a, 18b, wie oben beschrieben) angebracht ist, der an einen ASIC (nicht dargestellt) angeschlossen ist.

Der Sensor 60 bildet nun einen induktiven Sensor, wie oben beschrieben. Die Resonanzelemente 12a,12b auf den Rotorelementen 66a, 66b bewegen sich gegenüber dem Pad mit den Spulen 16a,16b, 18a, 18b am ringförmigen Stator 70. Mit der oben beschriebenen Signalauswertung kann die Drehposition der beiden Pucks 12a, 12b jeweils unabhängig voneinander festgestellt werden. Einerseits können diese Werte bei einer Lenkwelle zur Detektion des Lenkeinschlages verwendet werden. Andererseits zeigt eine Differenz der ermittelten Werte ein Drehmoment an der Welle 62 an, da nur ein solches zum Verdrehen der Rotoren 66a, 66b gegeneinander führt.

Der so gebildete Drehwinkel- und Drehmomentsensor 60 erlaubt bei mimimalem baulichen Aufwand und einer einfachen, für digitale Signalverarbeitung besonders geeigneten Verarbeitung somit eine sichere Erfassung sämtlicher Bewegungsdaten der Welle 62.

Zu den dargestellten Ausführungen sind eine Anzahl von Ergänzungen bzw. Modifikationen denkbar

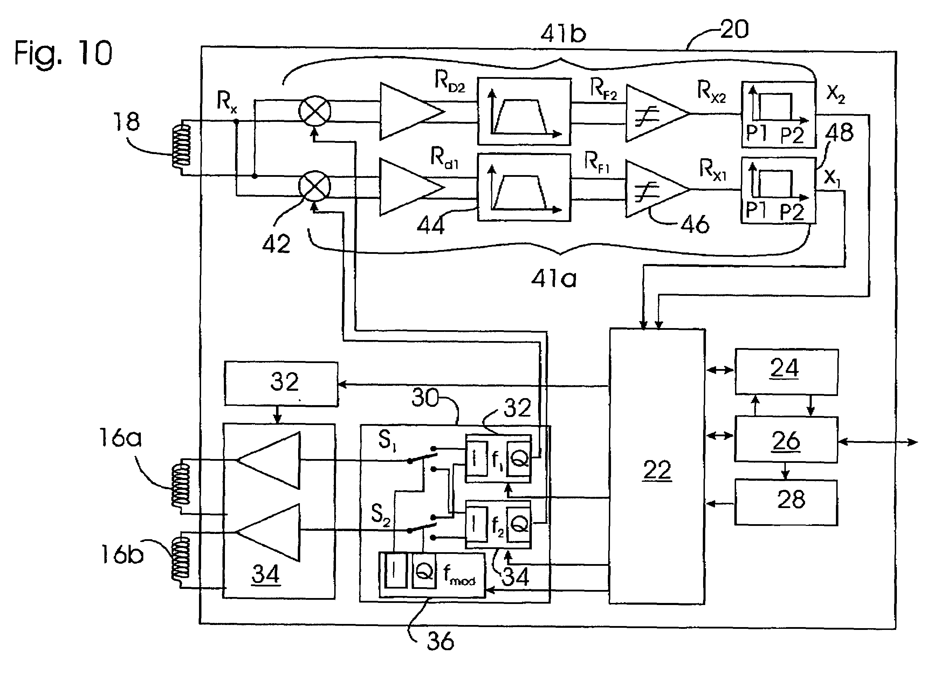

- Es kann auch die Position von mehr als nur zwei Pucks erfaßt werden. Um die Vorteile einer Differenzmessung mit denen einer redundanten Erfassung zu kombinieren, können bspw. zwei Pads jeweils mit zwei zugeordneten Pucks betrieben werden.
- Alternativ zu der in Fig. 4 gezeigten Signalverarbeitung mit zwei getrennten Empfangsspulen 18a, 18b, ist es wie in Fig. 10 gezeigt auch möglich, die von den Pucks 12a, 12b zurückgesandten Signale in nur einer Empfangsspule 18 aufzufangen und dann das Empfangssignal Rx in den beiden getrennten Strängen 41a, 41b getrennt zu verarbeiten.
- Um mögliche Meßfehler zu kompensieren, die sich aus einer Abweichung zwischen den verwendeten Trägerfrequenzen $f_1$, $f_2$ und den - möglicherweise Umwelteinflüssen unterliegenden - tatsächlichen Resonanzfrequenzen der Pucks 12a, 12b ergeben, ist es möglich, die in WO 03/038379 beschriebene Korrekturmessung mit einem Gegenphasensignal durchzuführen, so daß eine hierdurch ausgelöste Phasenverschiebung kompensiert werden kann. Allerdings kann für den Fall, daß lediglich Differenzwerte interessant sind (Torque-Sensor) hierauf auch verzichtet werden, da eine (konstante, additive) Phasenverschiebung hier keinen Einfluß hat.
- Wie in WO 03/038379 erläutert, können sowohl von der gezeigten geometrischen Struktur abweichende Spulenstrukturen als auch von den gezeigten Zeitverläufen abweichende Erregersignale verwendet werden.
- Während in Figur 2a-2c der Meßbereich bis zur Länge L lediglich eine einzige Periode der periodisch variierenden Spulen 16a, 16b umfaßt, ist es bevorzugt, wie bspw. in Figur 1, Figur 7a, Figur 8 angedeutet, den Meßbereich in mehrere Perioden aufzuteilen. Um ein dann entstehendes Aliasing-Problem (Mehrdeutigkeit) zu vermeiden ist es einerseits möglich, die Position der Pucks stets zu verfolgen und die Anzahl zurückgelegter Perioden in einem Zähler mitzuführen. Andererseits ist es auch möglich, mit zwei Pads unterschiedlicher Teilung zu arbeiten, wobei bspw. in dem Drehmomentsensor aus Figur 8, Figur 9 der Stator 70 statt nur einer Spulenstruktur zwei Spulenstrukturen unterschiedlicher Teilung trägt. Da jede Kombination von Meßwerten der ersten und der zweiten Spulenstruktur über den Meßbereich einmalig ist, läßt sich so eine Mehrdeutigkeit vermeiden.

**Patentansprüche**

1. Induktive Sensorvorrichtung mit mindestens

   - einer ersten und einer zweiten Erregerspule (16a,16b), die sich unterschiedlich räumlich variierend über einen Meßbereich erstrecken,
   - einer Empfangsspule (18, 18a, 18b),
   - einem ersten und einem zweiten induktiven Koppelelement (12a, 12b) zur Überkopplung eines Signals der Erregerspulen (16a,16b) in die Empfangsspule (18), wobei die induktiven Koppelelemente (12a, 12b) als Resonanzelemente ausgebildet sind, wobei das erste induktive Koppelelement (12a) eine erste Resonanzfrequenz ($f_1$) und das zweite induktive Koppelelement (12b) eine zweite Resonanzfrequenz ($f_2$) aufweist,
   - und wobei die erste Erregerspule (16a) mit einem ersten und die zweite Erregerspule (16b) mit einem zweiten Sendesignal ($S_1$, $S_2$) betrieben wird,

   **dadurch gekennzeichnet, daß**

   - jedes der Sendesignale ($S_1$, $S_2$) in zeitlicher Abfolge wechselnde Signalanteile einer ersten Trägerfrequenz nahe der ersten Resonanzfrequenz ($f_1$) und einer zweiten Trägerfrequenz nahe der zweiten Resonanzfrequenz ($f_2$) aufweist,
   - wobei sich die beiden Sendesignale ($S_1$, $S_2$) hinsichtlich derzeitlichen Abfolge unterscheiden.

2. Vorrichtung nach Anspruch 1, bei der

   - sich in den Sendesignalen ($S_1$, $S_2$) die Signalanteile der ersten und der zweiten Trägerfrequenz ($f_1$, $f_2$) mit einer Modulationsfrequenz ($f_{mod}$) ändern,
   - wobei sich die beiden Sendesignale ($S_1$, $S_2$) in der Phase bezüglich der Modulationsfrequenz ($f_{mod}$) unterscheiden.

3. Vorrichtung nach Anspruch 1 oder 2, bei der

   - die Sendesignale ($S_1$, $S_2$) als zeitlich aufeinanderfolgende erste und zweite Signalabschnitte (40a, 40b) gebildet sind,
   - wobei die ersten Signalabschnitte (40a) als Schwingungen der ersten Trägerfrequenz ($f_1$) und die zweiten Signalabschnitte (40b) als Schwingungen der zweiten Trägerfrequenz ($f_2$) gebildet sind,
   - wobei die Abfolge der Signalabschnitte im Takt einer Modulationsfrequenz ($f_{mod}$) erfolgt,
   - und wobei die Signalabschnitte (40a, 40b) der beiden Sendesignale ($f_1$, $f_2$) zueinander zeitverschoben sind.

4. Vorrichtung nach einem der vorangehenden Ansprüche, bei der

   - mindestens eine Empfangsspule (18, 18a, 18b) angeschlossen ist an eine Auswerteeinheit (20) zur Auswertung eines Empfangssignals ($R_x$) aus dem die Position der Koppelelemente (12a, 12b) ermittelt werden kann.
   - wobei die Auswerteeinheit (20) so ausgebildet ist, daß das Empfangssignal ($R_x$) demoduliert wird um ein erstes und ein zweites demoduliertes Signal ($R_{D1}$, $R_{D2}$) zu erhalten, deren Frequenz im wesentlichen der Modulationsfrequenz entspricht, wobei aus der Phase der demodulierten Signale ($R_{D1}$, $R_{D2}$) die Position der Koppelelemente (12a,12b) ermittelt wird.

5. Vorrichtung nach einem der vorangehenden Ansprüche zur redundanten Erfassung der Position eines Bewegungselements (52) gegenüber einem Statorelement (50), bei der

   - das Statorelement (50) einen Spulenschaltkreis mit den Erregerspulen (16a, 16b) und mindestens eine Empfangsspule (18) aufweist,
   - und das Bewegungselement (52) die beiden induktiven Koppelelemente (12a, 12b) umfaßt,

- wobei die Erregerspulen (16a, 16b) angeschlossen sind an einen Signalgenerator (20) zur Erzeugung und Zuführung der Sendesignale ($f_1$, $f_2$),
- und wobei die Empfangsspule (18) angeschlossen ist an eine Auswerteeinheit (20) zur Auswertung eines Empfangssignals ($R_x$), aus dem die Position des Bewegungselements (52) ermittelt wird.

6. Vorrichtung nach einem der vorangehenden Ansprüche 1-4 zur Erfassung der Position zweier Bewegungselemente (54, 66a, 66b) gegenüber einem Statorelement (50, 70), bei der

- das Statorelement (50, 70) einen Spulenschaltkreis mit den Erregerspulen (16a, 16b) und mindestens eine Empfangsspule (18) aufweist,
- und jedes der Bewegungselemente (54, 66a, 66b) eines der induktiven Koppelelemente (12a, 12b) umfaßt,
- wobei die Erregerspulen (16a, 16b) angeschlossen sind an einen Signalgenerator (20) zur Erzeugung und Zuführung der Sendesignale ($f_1$, $f_2$),
- und wobei die Empfangsspule (18) angeschlossen ist an eine Auswerteeinheit (20) zur Auswertung eines Empfangssignals ($R_x$), aus dem die Position der Bewegungselemente (54, 66a, 66b) ermittelt wird.

7. Vorrichtung nach Anspruch 6, bei der

- die Bewegungselemente (66a, 66b) auf axial beabstandeten Abschnitten einer Welle (62) so angeordnet sind, daß sie sich bei Drehung der Welle (62) gegenüber dem Statorelement (70) bewegen,
- wobei die wellenabschnitte (62a, 62b) elastisch verbunden sind, so daß sie sich bei einem Drehmoment an der Welle (62) so gegeneinander verdrehen, daß sich eine Bewegungsdifferenz der Bewegungselemente (66a, 66b) ergibt,
- wobei die Auswerteeinheit (20) die Bewegungsdifferenz ermittelt.

8. Verfahren zur induktiven Erfassung, bei dem

- eine erste und eine zweite Erregerspule (16a, 16b), die sich unterschiedlich räumlich variierend über einen Meßbereich erstrecken, mit unterschiedlichen Sendesignalen ($S_1$, $S_2$) betrieben werden, wobei die erste Erregerspule (16a) mit einem ersten Sendesignal ($S_1$) und die zweite Erregerspule (16b) mit einem zweiten Sendesignal ($S_2$) betrieben wird,
- und ein erstes und ein zweites induktives Koppelelement (12a, 12b) zur Überkopplung eines Signals der Erregerspulen (16a, 16b) in mindestens eine Empfangsspule (18) angeordnet sind, wobei die induktiven Koppelelemente als Resonanzelemente (12a, 12b) ausgebildet sind, wobei das erste induktive Koppelelement (12a) eine erste Resonanzfrequenz ($f_1$) und das zweite induktive Koppelelemcnt (12b) eine zweite Resonanzfrequenz ($f_2$) aufweist,

**dadurch gekennzeichnet, daß**

- jedes der Sendesignale ($S_1$, $S_2$) in zeitlicher Abfolge wechselnde Signalanteile einer ersten Trägerfrequenz nahe der ersten Resonanzfrequenz ($f_1$) und einer zweiten Trägerfrequenz nahe der zweiten Resonanzfrequenz ($f_2$) aufweist,
- wobei sich die beiden Sendesignale ($S_1$, $S_2$) hinsichtlich der zeitlichen Abfolge unterscheiden.

Fig. 1

Fig. 2a

Fig. 2b

Fig. 2c

L/4      L/2      L

3L/8

Fig. 3

Fig. 4

Fig. 5

Fig. 6

Fig. 7a

50

20

Fig. 7b

12a

12b

52

Fig. 7c

12a

54

Fig. 8

Fig. 9

Fig. 10

EP 1 925 914 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03038379 A
- WO 2004072653 A
- EP 1666836 A